# EUROPEAN PATENT SPECIFICATION

(11) **EP 1 498 241 B1**
(45) Date of publication and mention of the grant of the patent: **16.01.2008**
(21) Application number: 04077037.2
(22) Date of filing: 14.07.2004
(51) Int. Cl.: B27N 3/28, B29C 47/00, B29B 17/00, B27N 3/00

(54) **Method for manufacturing a shaped body and a shaped body**
Verfahren zur Herstellung eines Formkörpers und nach diesem Verfahren hergestellter Formkörper
Procédé de fabrication d'un objet moulé et objet fabriqué selon ce procédé

(30) Priority: 14.07.2003 BE 200300406
(43) Date of publication of application: 19.01.2005
(73) Proprietor: Beologic NV, 8554 Zwevegem (BE)
(72) Inventor: Naesens, Dimitri, 8530 Harelbeke (BE)
(74) Representative: Ostyn, Frans

(56) References cited:
- EP-A- 0 581 039
- WO-A-94/11168
- DE-A1- 19 958 756
- US-A1- 2003 021 915
- US-A1- 2003 056 873

## Description

The invention relates to a shaped body and a method to manufacture a shaped body, more particularly a grain, a profile, a board or any other shaped body.

The use of shaped bodies manufactured on the basis of fibres, more particularly on the basis of wood fibres is generally known. As in the future the availability of trees may cause problems, the use of shaped bodies based on wood fibres becomes more important. Such a shaped body is constituted, for instance, by melaminated wood fibres, is constituted, for instance by MDF or so-called "Medium Density Fibreboard" having a density of about 800 grams/litre or is constituted, for instance, by HDF or so-called "High Density Fibreboard having a density of about 1000 grams/litre. With such shaped bodies, wood fibres are caked together by means of a binding agent such as melamine resin in order to constitute the shaped body. This caking together is obtained, for instance, by applying non-cured melamine resin which is made to cure between the wood fibres. Such shaped bodies will contain, for instance, 85% of wood fibres, 13% of cured melamine resin and 2% of so-called additives influencing the attachment to or the combination of the melamine resin and the wood fibres. In doing so, the density of the shaped body is determined, for instance, by the degree of humidity of the wood fibres, before they are made to constitute a shaped body, together with a binding agent such as melamine resin and additives, by means of an extrusion process.

Shaped bodies made of the material mentioned before may be machined easily and with precision, for instance, by sanding, grinding, milling, drilling or sawing among other things. When machining such shaped bodies, small particles are produced, containing wood fibres with cured binding agent, more particularly wood fibres with cured melamine resin, so-called HDF or MDF dust or tiny so-called HDF or MDF grains. Because of the presence of the binding agent already cured, such as cured melamine resin, such particles are no longer suitable to be caked together again in order to constitute a shaped body as mentioned before.

In US 2003/0021915, cellulose-polymer composites are described that are characterized by the cellulose component being thoroughly encapsulated by the polymer component. The cellulosic fibre component of the subject compositions may be comprised of wood pulp or flour, sawdust, paper mill and lumber mill waste and the like, and can be hardwood, softwood or mixtures thereof.

The disadvantage of these cellulose-polymer composites is that they are sensitive to humidity through which they are very sensitive to mildew.

The purpose of the invention is to obtain a method for applying such particles to manufacture a shaped body and to obtain a shaped body according to such a method, wherein the shaped body is less sensitive to humidity and consequently less sensitive to mildew.

For this purpose, the method according to the invention comprises mixing an amount of particles containing wood fibres with cured binding agent and an amount of polymer, and extruding this mixture, wherein the method comprises the mixing of an amount of particles containing wood fibres with cured binding agent originating from MDF or HDF shaped bodies.

In this way, a shaped body is obtained that is less sensitive for humidity and consequently is less sensitive for mildew.

Furthermore, this method according to the invention has the advantage that it will become possible to produce a shaped body because of the presence of the polymer, wherein particles are present which are containing wood fibres with cured binding agent that are originating from machined MDF or HDF shaped bodies, such as, for instance, fibres of wood with cured melamine resin. The adherence or the combination between the particles containing wood fibres with cured binding agent that are originating from MDF or HDF shaped bodies is hereby obtained by making the polymer to combine, more particularly, by making the polymer to polymerize. According to a variant, combination may be likewise obtained by making the particles of polymer mutually to combine by adding an additive. Hereby, the cured binding agent, more particularly, the cured melamine resin contained in the particles with wood fibres that are originating from MDF or HDF shaped bodies, is influencing the combination or the adherence of the polymer and these wood fibres, more particularly that binding agent will influence, among other things, the infiltration of the polymer and/or the absorption of the polymer and/or the adherence of the polymer and/or the combination of the polymer with the particles consisting of wood fibres with the cured binding agent that are originating from MDF or HDF shaped bodies. In that manner, it will be possible, for instance, to recuperate small particles originating from sanding, grinding, milling, drilling, sawing or machining shaped bodies made of MDF or HDF, more particularly, particles containing wood fibres with binding agent already cured, in order to manufacture new shaped bodies. Besides wood fibres, such particles will contain, for instance, about 13% of binding agent already cured and, for instance, 2% of additives. Most of the time, such small particles containing wood fibres with cured binding agent that are originating from MDF or HDF shaped bodies will show an uneven outer surface, which is advantageous for the above-mentioned adherence between the polymer and the external surface of the particles mentioned above.

Such shaped bodies obtained according to the invention, have, among other things, a sufficiently smooth surface, a practically constant strength, a practically constant hardness, a satisfactory flexibility, a satisfactory durability, a limited permeability to water, a limited and relatively slow absorption of water and a satisfactory water-resistance. Such shaped bodies are also sufficiently water-repellent, are easily mechanically machinable, have shock-absorbing and sound-absorbing properties and are most of the time heat insulating, may be painted most of the time and require little maintenance. Such properties may be partly put down to the presence of a cured binding agent, more particularly to the cured melamine resin. Such shaped bodies are suitable, among other things, to be applied as decorative material or as sound insulating walls. A shaped body obtained according to this method may also be easily machined and/or shaped. Because of the presence of the cured binding agent near the wood fibres the combination or the adherence between the polymer and the particles containing wood fibres with cured binding agent that are originating from MDF or HDF shaped bodies is likewise influenced, more particularly, such combination or adherence may be realized without the addition of a considerable amount of additives favouring the combination or the adherence of the polymer with or to the wood fibres. It is clear, of course, that an amount of additives may be added in order to favour such a combination or adherence.

In a preferred method according to the invention, the amount of particles containing wood fibres with cured binding agent are originating from the machining of MDF or HDF shaped bodies.

Particles that originate from the machining of MDF or HDF shaped bodies can for instance be formed during the forming of the grooves in MDF or HDF plates.

This has the advantage that such particles are relatively dry, due to the heat produced during machining. That is why these particles will enable a shaped body to be produced according to the invention which is slightly porous, and without the necessity of subjecting the above-mentioned particles to a drying process, before the shaped body according to the invention will be manufactured. The use of the relatively dry particles mentioned above is likewise advantageous for combining or adhering the polymer to the particles containing wood fibres with cured binding agent that are originating from MDF or MDF shaped bodies, more preferably machined MDF or MDF shaped bodies and for the speed with which the mixture may be extruded.

If necessary, such particles are subjected to a drying process before being mixed, in order to enable, among other things, a shaped body according to the invention to be manufactured that is only slightly porous. In doing so, it is preferable to crush the shaped bodies until sufficiently small particles are obtained.

According to a preferred embodiment, the said particles preferably have a diameter which is smaller than 2 mm.

According to an embodiment, such particles have a diameter that is smaller than 0.6 mm.

The smaller such particles are, the more homogenously a shaped body according to the invention can be manufactured. Moreover, applying such particles with a small diameter enables a shaped body to be manufactured with a relatively smooth surface. It is clear that the particles need not to be round; they may be elongated, cube-shaped or rather beam-shaped. With the above-mentioned particles, by diameter may be meant, for instance, the longest distance between two points along the surface of the particle.

According to a preferred embodiment according to the invention, the said particles are passed through a sieve before they are mixed, in order to obtain particles with a maximum size determined by the sieve. Hereby, the particles which, for instance have been produced by machining or crushing of MDF or HDF shaped bodies and which have a diameter smaller than 0.6 or smaller than 2 mm, are applied, for instance, with the method according to the invention, whereas the larger particles have to be crushed first, for instance, in order to be nonetheless applied with the method according to the invention.

According to a preferred embodiment, the method comprises the supply of an amount of polymer to be mixed that consists, for instance, of polypropylene likewise called polypropene, polyethylene, both polyethylene with a low density and polypropylene with a high density, as well as polyvinyl chloride (PVC), polystyrene, ethyl vinyl acetate, acrylonitrile butadiene styrene (ABS), polyolefine or other polymers. The amount of polymer to be mixed may likewise consist of a mixture of the materials or polymers mentioned above. Preferably, however, polymers are used, which, preferably, are able to polymerize mutually or several times mutually.

According to an embodiment, the method comprises the supply of an amount of particles of polymer to be mixed which have been produced by machining, for instance, sawing, drilling, or crushing shaped bodies of polypropylene, polyethylene, polyvinyl chloride or any other polymer. These particles may have been produced, for instance, by crushing again or not, the saw dust of shaped bodies made of polymer to fine particles of polymer, or they may have been produced by crushing shaped bodies of polymer to be recycled. Of course, the polymer may have been likewise produced by so-called production waste, more particularly, production waste obtained when starting up a new extrusion process, for instance, an extrusion process for extruding polyvinyl chloride (PVC). Such production waste may be crushed to fine particles of polymer to be used with a method according to the invention, for instance. Although it is not necessary, such particles of polymer preferably have a diameter in the same order of magnitude as the particles containing wood fibres with cured binding agent.

Preferably, the polymer is supplied in the form of particles of polymer. Such particles of polymer may originate from a chemical plant and may be considered to be a new polymer. Of course, such particles of polymer may likewise be produced by machining shaped bodies made of polymer. In the latter of these cases, this polymer may be considered to be recycled. However, according to the invention, it is not necessary to provide particles of polymer. The polymer may also be supplied in the form of a practically liquid mass or a practically plastic mass that may be mixed with the particles containing wood fibres with cured binding agent that are originating from MDF or HDF shaped bodies, more preferably machined MDF or HDF shaped bodies. Such a mass may be supplied, for instance, at a temperature lying considerably above room temperature.

According to a preferred embodiment, at least one additive is mixed with the particles containing wood fibres with cured binding agent that are originating from MDF or HDF shaped bodies, more preferably machined MDF or HDF shaped bodies and the polymer. Such an additive may be chosen such that the additive will favour the combination or the adherence of the particles containing the wood fibres with cured binding agent that are originating from MDF or HDF shaped bodies, more preferably machined MDF or HDF shaped bodies and the polymer or the mutual combination or adherence of the particles of polymer. Such an additive may also be chosen such that the additive will favour the mutual combination or the adherence between the particles containing fibres of wood with cured synthetic material that are originating from MDF or HDF shaped bodies, more preferably machined MDF or HDF shaped bodies. By adding an additive it is also possible to obtain that the particles containing wood fibres with cured binding agent that are originating from MDF or HDF shaped bodies, more preferably machined MDF or HDF shaped bodies and the polymer will not repel one another or at least will repel one another to a lesser degree. Yet, as an additive may be used, an anhydride, for instance maleic anhydride, a polyurethane, an unsaturated polyester, an epoxy resin, for instance a liquid epoxy resin, a phenol, a sodium carbonate, a polymethyl methacrylate (PMMA), a wax or yet another additive. Such additives may influence, among other things, the combination or the adherence between the polymer, the wood fibres that are originating from MDF or HDF shaped bodies, more preferably machined MDF or HDF, shaped bodies and/or the cured binding agent. Moreover, such additives may likewise have an influence on the combination or the adherence of the binding agent and the polymer. Because of the presence of the binding agent, the melamine resin for instance, a relatively small amount of additive, for instance, a small amount of maleic anhydride will do to obtain a good combination or a good adherence between the particles containing wood fibres with cured binding agent that are originating from MDF or HDF shaped bodies, more preferably machined MDF or HDF shaped bodies, for instance, wood fibres with melamine resin and the polymer here essentially consisting of, for instance, polypropylene, polyethylene or polyvinyl chloride (PVC).

It has been ascertained that so-called "maleated" polypropylene, this is a compound of polypropylene and maleic anhydride and which is likewise called maleic anhydride filled with polypropylene, or "maleated" polyethylene, which is a compound of polyethylene and maleic anhydride and is likewise called maleic anhydride filled with polyethylene, gives relatively good results for constituting a shaped body according to the invention. Such "maleated" polypropylene or such "maleated" polyethylene is applied here, for instance, as an additive and is mixed with practically pure polypropylene or practically pure polyethylene and with wood fibres containing cured binding agent that are originating from MDF or HDF shaped bodies, more preferably machined MDF or HDF shaped bodies, such as wood fibres with cured melamine resin, for instance. Of course maleic anhydride may be added as an additive to a mixture of particles containing wood fibres with cured binding agent that are originating from MDF or HDF shaped bodies, more preferably machined MDF or HDF shaped bodies and of polypropylene or polyethylene. This means also that the polymer may consist, for instance, either of pure polymer, or that at least part of a practically pure polymer may be combined in advance with an additive which makes the polymer more suitable to combine with or to become adhered to the particles containing wood fibres with cured binding agent that are originating from MDF or HDF shaped bodies, more preferably machined MDF or HDF shaped bodies.

According to an embodiment, at least also one other additive may be added, such as, for instance, pure wood fibres. Such wood fibres may originate, for instance, from birch wood, for instance, fine fibres of birch wood, saw dust of birch wood or crushed waste of birch wood. Of course, also other sorts of wood are possible, for instance, oak wood, beech wood, fir wood or any other kind of wood. Such additives may likewise have an influence on the properties of the shaped body manufactured, more particularly, may have an influence on the combination or the adherence between the particles containing wood fibres with cured binding agent that are originating from MDF or HDF shaped bodies, more preferably machined MDF- or HDF shaped bodies and the polymer. It has been established here that adding of birch wood, among other things, has a positive influence on the properties of the shaped body manufactured on the basis of particles originating from MDF or HDF shaped bodies. It is clear that hereby the wood fibres may be heated up beforehand, so that they may dry or obtain the degree of humidity required. By choosing the degree of humidity of the wood fibres, of course, the density or the porosity of the shaped body manufactured may likewise be influenced. In doing so, the use of dry wood fibres favours the speed at which the mixture may be extruded.

According to the invention, the particles containing wood fibres with cured binding agent that are originating from MDF or HDF shaped bodies, more preferably machined MDF or HDF shaped bodies, the polymer or the particles of polymer and the possible additives which may be contained are mixed to constitute a practically homogenous mixture. Such a mixture is extruded in order to constitute a shaped body. Mixing may occur before and/or still during extrusion. During this extrusion process the mixture is compressed and subsequently conducted through a nozzle, for instance, which essentially will determine the cross-section of the extruded material or the cross-section of the shaped body. During this extrusion process and/or after this extrusion the polymer will, anyhow at least partially, be combined around the particles containing wood fibres with cured binding agent that are originating from MDF or HDF shaped bodies, more preferably machined MDF or HDF shaped bodies, but more particularly will polymerize, so that, consequently the polymer will constitute a practically homogenous entity. In case particles of polymer are mixed and are extruded together with the particles of wood fibres with cured binding agent that are originating from MDF or HDF shaped bodies, more preferably machined MDF or HDF shaped bodies, such particles of polymer may be mutually combined. This means, among other things, that the particles of polymer are interconnected, more particularly, that the various particles of polymer have been merged into one another or, together, are constituting a whole. In the latter of these cases the particles of polymer and the transition zones between the particles of polymer mentioned above will disappear, so that a whole is constituted, originated from the particles of polymer that have mutually polymerized. By combining the polymer around the particles containing wood fibres with cured binding agent that are originating from MDF or HDF shaped bodies, more preferably machined MDF or HDF shaped bodies, it will be obtained that the polymer is enveloping the particles containing wood fibres with cured binding agent that are originating from MDF or HDF shaped bodies, more preferably machined MDF or HDF shaped bodies, at least partially and even completely.

According to an embodiment, at least part of the particles of wood fibre with cured binding agent that are originating from MDF or MDF shaped bodies, more preferably machined MDF or HDF shaped bodies to be mixed and/or at least part of the polymer to be mixed are heated before and/or during extrusion. It may be advantageous to heat up only the particles of wood fibres with cured binding agent that are originating from MDF or HDF shaped bodies, more preferably machined MDF or HDF shaped bodies before extrusion. Owing to this the mixture is brought to a temperature, for instance, lying well below the melting point of the polymer. This heating up is advantageous to combine the polymer. This heating up may occur, for instance, by means of a heating device, such as an infrared radiation heater, heating up the mixture or at least part of this mixture, to a temperature which lies, for instance, well below the melting point of the polymer. As during extrusion of the mixture, most of the time, sufficient heat is produced, more particularly, heat which is produced by compression and friction of the mixture, however, heating up this mixture, by means of heating elements, is sometimes still required near the extruder. Of course, there is also the possibility that so much heat is produced during extrusion that the necessity to cool down the mixture, more particularly to cool down the extruder, is recommended. This cooling down may occur by providing cooling means, such as water cooling, oil cooling, or any other cooling device in or near the extruder, more particularly, for instance, near the walls of the extruder. Because of this cooling, the temperature of the mixture may stay well below the melting point of the polymer. During this extrusion, the mixture is compressed, for instance, to a pressure of about 100 to 200 bars and a temperature situated between 80 and 160 degrees is reached. In case the polymer used is polyethylene, the temperature varies between 80 and 120 degrees, whereas in case polypropylene is used as a polymer the temperature may vary between 120 and 160 degrees.

According to an embodiment, the method comprises the cooling down of the extruded material, more particularly the cooling down of the extruded material, practically right after this extruded material is leaving the extruder. Preferably, the extruded material is cooled by applying a liquid around the circumference of the extruded material which, at the same time, is impregnating the extruded material, in other words, a liquid saturating, at least partly, the shaped body to be manufactured. As a liquid for cooling down, oil is applied, for instance, either oil that has been cooled or oil at room temperature. In order to favour impregnation, the liquid, more particularly the oil for instance, may be supplied to the shaped body at a high pressure. Such a liquid is not only advantageous for cooling down the extruded material right after extrusion, but it enables, by impregnation this liquid in the extruded material, a shaped body to be manufactured, having other properties, for instance, a shaped body that is relatively water tight or water repellent. In order to obtain such properties, fine oil is used, for instance, as a liquid for cooling. Of course, cooling may also occur by means of other fluids, such as, for instance, air, gas, water or any other fluid. Cooling has likewise the advantage that the extruded material, because of the cooling, is setting relatively quickly and, in this manner, sufficient solidity is rapidly obtained.

In order to favour combining, more particularly polymerization, the extruded material, after extrusion and a possible cooling may be subjected again to heat or being heated up in order to finish or to favour the above-mentioned combining of at least the polymer. This may occur, for instance, by conducting the shaped bodies through a heating device, such as an infrared radiation heater, heating up the extruded material with the polymer to, for instance, a temperature well below the melting point of the polymer. Of course, a further combining of at least the polymer may also occur at room temperature.

After extrusion, for instance, by means of an extruder provided with a nozzle, the continuously extruded material may be put to length in order to form a shaped body having a certain length and a cross-section determined by the above-mentioned nozzle of the extruder. This putting to length may occur, for instance, after the possible cooling and/or after a possible reheating of the shaped body extruded, but according to a variant, it may also occur before. Such shaped bodies may consist of a grain, a profile, a board or any other shaped body. The shaped bodies may be put to length by means of a sawing device, a shearing device, a cutting device or any other similar device enabling shaped bodies to length to be obtained.

According to a preferred embodiment, the particles of wood fibres with cured binding agent that are originating from MDF or HDF shaped bodies, more preferably machined MDF or HDF shaped bodies and the polymer are mixed and extruded by means of a double screw extruder. Such an extruder may be advantageously used for mixing the particles of wood fibres with cured binding agent that are originating from MDF or HDF shaped bodies, more preferably machined MDF or HDF shaped bodies and the polymer. Such an extruder likewise enables this mixed material, by means of the friction between the double screw and the mixed material, to be heated up sufficiently when being pressed together or being compressed by the extruder, between the point of supply for the material to be mixed and the nozzle where the compressed material leaves the extruder in an extruded form. This heating up is advantageous to favour the combination, more particularly, for the polymerization of the polymer. Such a double screw extruder comprises, for instance, two screws rotating together, either in the same direction or in the opposite direction. Such screws may be installed either parallel to one another or at an angle with respect to one another.

For the purpose of the invention, the invention comprises a shaped body manufactured by the mixing and the extrusion of an amount of particles containing wood fibres with cured binding agent and an amount of polymer, wherein the particles containing wood fibres with cured binding agent are originating from MDF or HDF shaped bodies.

Preferably, the particles containing wood fibres with cured binding agent are originating from the machining of MDF or HDF shaped bodies.

A shaped body comprises, for instance, about 70% of wood fibres with cured binding agent that are originating from MDF or HDF shaped bodies, more preferably machined MDF or HDF shaped bodies and about 30% of polymer.
Moreover the shaped body may still contain additives, for instance, about 3%.

For instance, the shaped body contains polypropylene as a polymer, polypropylene filled with maleic anhydride as an additive and wood fibres with cured melamine resin as wood fibres with cured binding agent that are originating from MDF or HDF shaped bodies, more preferably machined MDF or HDF shaped bodies

The properties and further advantages of the invention will now be further explained by means of the non-limiting embodiments represented in the drawings, in the following detailed descriptions. In these descriptions reference is made to the following drawings, wherein:

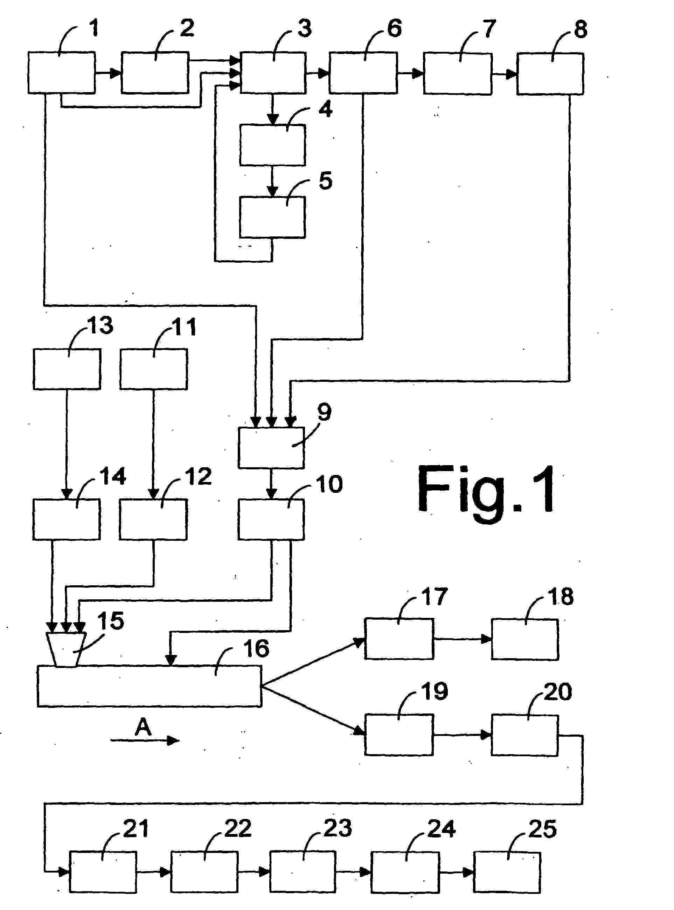

*Figure 1* schematically represents a device for manufacturing a shaped body according to the invention.

Figure 1 represents a diagram of a method for manufacturing a shaped body according to the invention. A storage unit 1 contains an amount of particles containing wood fibres with cured binding agent that are originating from MDF or HDF shaped bodies, more preferably machined MDF or HDF shaped bodies. These particles have been produced, for instance, by the machining of shaped bodies consisting of wood fibres with cured binding agent that are originating from MDF or HDF shaped bodies, more preferably machined MDF or HDF shaped bodies. Such particles may likewise originate from crushing shaped bodies consisting of wood fibres with cured binding agent that are originating from MDF or HDF shaped bodies, more preferably machined MDF or HDF shaped bodies.

According to a possibility, these particles are supplied to a drying device 2 for drying the particles. If the above-mentioned particles are already sufficiently dry, it will be clear that this drying device 2 is optional. Subsequently the particles having been dried or not by the drying device, are supplied to a sieving device 3, in order to sieve the particles. The relatively large particles that are unable to pass through the openings of the sieve of the sieving device 3, are conveyed to a storage unit 4 in order to be subsequently crushed by a crushing device 5. The particles crushed in this manner are again conducted to the sieving device 3. The relatively, or sufficiently small particles that have passed the openings of the sieve in the sieving device 3 are hereby conveyed to a storage unit 6 to be subsequently supplied, for instance, to a drying device 7 in order to dry these particles, which drying device 7 is likewise optional. Subsequently, the particles are conveyed to a storage unit 8 for storing the particles.

Subsequently the particles from the storage unit 6 or the particles from the storage unit 8 may be conveyed to a heating device 9 for heating up and also for drying those particles, which heating device 9 is likewise optional. The drying devices 2, 7 and the heating device 9 may consist of an infrared radiation heater. If the particles of the storage unit 1 are already sufficiently small they may be conveyed directly to heating device 9. By sufficiently small particles is meant, for instance, particles with a diameter smaller than 2 mm, and preferably particles with a diameter smaller than 0.6 mm.

Subsequently, the particles from the heating device 9 are conveyed to a dose-measuring device 10 for measuring the particles into doses, which dose-measuring device 10 is intended to supply an amount of particles to be mixed containing wood fibres with cured binding agent that are originating from MDF or HDF shaped bodies, more preferably machined MDF or HDF shaped bodies. Moreover a storage unit 11 for additives has been provided as well as a dose-measuring device 12 for the additives to be measured into doses, which dose-measuring device 12 is intended to supply an amount of additives to be mixed. There has likewise been provided a storage unit 13 for the polymer and a dose-measuring device 14 for measuring the polymer into doses, which dose-measuring device 14 is intended to supply an amount of polymer to be mixed. This amount of polymer to be mixed, may consist of particles of polymer, for instance, particles of polymer originating from the machining of shaped bodies made of polymer. According to a variant, this amount of polymer to be mixed may be supplied in the form of a practically liquid mass or a practically plastic mass, whereby such a mass being supplied, for instance, at a temperature which lies well above room temperature. In the latter of these cases, the storage unit 13 may be provided with, for instance, heating elements in order to heat up the stored polymer near the storage unit 13.

The particles containing wood fibres with cured binding agent that are originating from MDF or HDF shaped bodies, more preferably machined MDF or HDF shaped bodies to be supplied, are containing, for instance, wood fibres with cured melamine resin, being sieved or not by a sieving device 3 before being supplied. The polymer to be supplied contains, for instance, polypropylene, likewise called propene, polyethylene, both low density polypropylene and high density polypropylene, polyvinyl chloride (PVC), polystyrene, ethyl vinyl acetate, acrylonitrile butadiene styrene (ABS) or polyolefine. The additive to be supplied contains, for instance, an anhydride, for instance, maleic anhydride, a polyurethane, an unsaturated polyester, an epoxy resin, for instance, liquid epoxy resin, a phenol, a sodium carbonate, a polymethyl methacrylate (PMMA), propylene filled with maleic anhydride, polyethylene filled with maleic anhydride, a wax or pure wood fibres.

Furthermore, an extruder 16 equipped with a hopper 15 has been indicated. The extruder 16 may consist of a double screw extruder. Through the hopper 15 an amount of polymer is supplied to the extruder 16 by the dose-measuring device 14, all this together with an amount of additive, supplied by the dose-measuring device 12. The amount of polymer and the amount of additive are mixed together by means of the extruder 16, while they are moved in the direction A at the same time.

According to a first possibility, at a certain distance after the hopper 15, particles of wood fibres with cured binding agent that are originating from MDF or MDF shaped bodies, more preferably machined MDF or HDF shaped bodies are supplied to the extruder 16 through the dose-measuring device 10. In the extruder 16, the particles mentioned above, are mixed with the polymer and the additive, during the time this mixture is moved on by the extruder 16 in the direction A. During this moving on, the mixture obtained is compressed, and because of this being compressed and because of the friction between the mixture and the extruder 16, heat is generated. This compressed mixture moving on is extruded in the process and leaves the extruder 16 through a discharge opening, provided at the end of the extruder 16, situated opposite the hopper 15. During and after this extrusion, the polymer is combined around the particles containing wood fibres with cured binding agent that are originating from MDF or HDF shaped bodies, more preferably machined MDF or HDF shaped bodies, more particularly, the polymer is polymerizing around the particles mentioned before or the polymer is combining around the particles mentioned above. This polymerization is started, among other things, by the temperature and the pressure generated by the extrusion. At the same time is obtained that the particles of wood fibres with cured binding agent that are originating from MDF or HDF shaped bodies, more preferably machined MDF or HDF shaped bodies contained, are surrounded by the polymer, at least partially. In the process, the above-mentioned particles may become each separately completely surrounded by the polymer or they may become surrounded by the polymer, together with one or more other particles of those mentioned above. In the latter of these cases the above-mentioned particles may be combined with other particles mentioned above along a certain part of their circumference or adhered to other particles mentioned above and, for instance, be combined with the polymer and/or an additive for the remaining part of it.

According to another possibility, the particles of wood fibres with cured binding agent that are originating from MDF or HDF shaped bodies, more preferably machined MDF or HDF shaped bodies are supplied to the extruder 16 through the dose-measuring device 10 near the hopper 15. Subsequently, the mixture supplied is mixed and extruded as mentioned before. It is, of course, likewise possible, to supply particles of wood fibres with cured binding agent to the extruder 16 in the direction of A, both near the hopper 15 and at a certain distance from the hopper 15.

Subsequently, according to a first possibility, a shaped body is manufactured by supplying the extruded mixture or the extruded material leaving the extruder 16, to a granulating device 17 which transforms the extruded material into granulates or grains. This is obtained by cutting the extruded material at a suitable length each time, by means of the granulating device 17 comprising trough-flow openings and at least one shearing device. Subsequently, the granulates or grains thus obtained are stored in a storage unit 18.

According to another possibility, the extruded material is conducted through a nozzle 19, for instance, a die forcing the extruded material into a certain cross-section. Subsequently, this extruded material is conducted to a calibrating device 20 which will improve its form and its form retention. Subsequently, the extruded material is cooled down by means of a cooling unit 21, in order to further improve its form retention, among other things. Subsequently, the extruded material may be conducted, for instance, to a heating device 22 in order to favour the combination, more particularly, the combination of the polymers. This combination is favoured by heating up the above-mentioned extruded material. Next, the extruded material is conducted to a drawing device 23 which picks up this extruded material in order to move it forward at a precisely determined speed to conduct it then, for instance, to a sawing device 24 to determine the shaped body as to length by sawing the extruded material to length. In the process, this drawing device 23 synchronizes the movements of the extruded material and the sawing device 24. Subsequently the shaped bodies obtained in this manner are stored in a storage unit 25. Of course, this putting to length of a shaped body is not absolutely required and according to a variant, very long shaped bodies may be obtained with the extruded material.

According to a preferred embodiment and by means of a cooling unit 21, a liquid is brought into contact with the outer circumference of the extruded material in order to cool down the extruded material and therefore to make it to set rapidly in this manner. Preferably, to that effect a liquid, such as an oil is applied along the outer circumference of the extruded material which will impregnate into the extruded material and thus also into the shaped body to be manufactured. By impregnating with oil, for instance, a shaped body may be obtained that is more repellent and less permeable to water.

According to a variant not shown, the drawing device 23 and the sawing device 24 may be installed before the cooling device 21 and the heating device 22. In that case the extruded material is first put to length before being cooled and reheated.

According to another variant, before cooling down the extruded material, this material is fed to a shaping device in order to give it a particular shape. For instance, this extruded material or the shaped body obtained after the extrusion is fed to an injection moulding device in order to obtain a particularly shaped body starting from the extruded material. After this, the obtained shaped body may be cooled and/or reheated to retain the particular shape.

Preferably, the extruder 16 used is a double screw extruder. It has been ascertained that good results are obtained when the extruder is provided with two mutually rotating screws, installed parallel to one another and running in the same direction. The extruder 16 may also be provided with heating elements or cooling means in order to heat up or cool down the extruded material respectively.

Hereby, a shaped body is obtained, containing an amount of particles containing wood fibres with cured binding agent that are originating from MDF or HDF shaped bodies, more preferably machined MDF or HDF shaped bodies and an amount of polymer and, if any, an amount of additive. In such shaped bodies the polymer is combined in order to surround, at least partially, the particles containing wood fibres with cured binding agent that are originating from MDF or HDF shaped bodies, more preferably machined MDF or HDF shaped bodies. This means that the particles containing wood fibres with cured binding agent that are originating from MDF or HDF shaped bodies, more preferably machined MDF or HDF shaped bodies are surrounded by the polymer all along their entire circumference, practically along their entire circumference or only partially along their circumference. In this manner, the above-mentioned particles are maintained by the polymer. In this way the particles mentioned above may be chemically combined with the polymer, and/or with the additive and/or mutually with one another and at the same time being mechanically attached to the polymer and/or the additive and/or to one another. Such a shaped body may be obtained by applying the method according to the invention.

According to an embodiment producing shaped bodies with good properties, the shaped body contains about 70% of wood fibres with cured binding agent that are originating from MDF or HDF shaped bodies, more preferably machined MDF or HDF shaped bodies, about 30% of polymer and about 3% of additives. According to a preferred embodiment, the shaped body contains wood fibres containing cured melamine resin, polypropylene and polypropylene filled with maleic anhydride.

The fact that the mixed material according to the invention may be extruded, has the additional advantage that the shaped body may be provided with grooves running in the direction of the extrusion, without, for instance, having to machine the shaped body according to the invention in order to obtain such grooves.

Also crushed wood fibres, wood fibres originating from the machining of wood, such as, among other things, saw dust or scouring dust may be added to the mixture of particles containing wood fibres with cured binding agent that are originating from MDF or HDF shaped bodies, more preferably machined MDF or HDF shaped bodies as an additive. It may be necessary, of course, to dry this additive, before adding it to the above-mentioned mixture. This may be required, because wood fibres may have a humidity of about 8% under normal conditions, whereas wood fibres with cured binding agent that are originating from MDF or HDF shaped bodies, more preferably machined MDF or HDF shaped bodies, such as wood fibres with cured melamine resin, have a humidity of 5% or less. The drier the mixed particles are, the less porous the shaped body obtained will be and the more rapidly the extrusion process may occur.

Using a wax as an additive is not particularly advantageous in the first place for combining or adhering together the polymer and the particles containing wood fibres with cured binding agent that are originating from MDF or HDF shaped bodies, more preferably machined MDF or HDF shaped bodies. First of all, such a wax has the advantage that the mixture passes well through the extruder 16 and that the shaped body obtained has a good resistance to water or is water-repellent to a certain extent.

It is clear that the particles of polymer do not necessarily have to polymerize together. Such particles may also be combined together by means of an additive or may be combined together by a partial mutual polymerization. Of course, the use of polymers enabling a simple and multiple polymerization is preferred.

According to a variant, the possibility of degassing the mixture during extrusion by means of an extruder 16 may also be provided. By degassing it is likewise possible to obtain a shaped body with a higher density. Such gases consist, for instance, of water vapour, originating from the evaporation of the water contained in the mixture to be extruded that has been heated up. The consequences of this degassing are most of the time, that the extrusion speed is more limited than in case no degassing occurs.

After having manufactured a shaped body according to he invention it is, of course, possible to protect such a shaped body by an outer layer. For instance, with a layer of plastic applied around the outer surface of the shaped body. The outer surface of such a shaped body may also be covered with a layer of paint or any other product.

A shaped body obtained by using a method according to the invention, may be used for various applications. Such a shaped body is suitable, among other things, as a decorative material, as a sound absorbing material, as a heat insulating material or as a building material.

One of the further advantages of the shaped body according to the invention is that it may be manufactured in a simple manner and at a favourable price. Moreover, all or nearly all the material of the shaped body may consist of recycled material. The invention likewise offers the advantage, that it allows certain materials to be reapplied, which up to the present were only suitable to be destroyed by burning or to be dumped.

The method according to the invention is, for instance, used for manufacturing shaped bodies comprising about 70% of wood fibres with cured binding agent that are originating from MDF or MDF shaped bodies, more preferably machined MDF or HDF shaped bodies on the one hand and about 30% of polymer and additives on the other hand. Applying particles containing wood fibres with cured binding agent that are originating from MDF or MDF shaped bodies, more preferably machined MDF or HDF shaped bodies, still more preferably from sanding shaped bodies, moreover have a very irregular outer surface which makes such particles very suitable to obtain a good mechanical adherence to a polymer, this in addition to a chemical bond with an additive or a polymer.

Of course, the cured binding agent is not restricted to only melamine resin, but may likewise be a natural or a synthetic resin with curing possibilities. Such a binding agent may likewise consist of, for instance, phenolic resin, a thermoplastic resin or any other resin, formaldehyde, glue or any other natural or synthetic binding agent.

According to a variant embodiment, the method comprises the supply of an amount of particles to be mixed containing wood fibres with cured binding agent that are originating from MDF or HDF shaped bodies, more preferably machined MDF or HDF shaped bodies, for instance, cured melamine resin and which have been produced by crushing shaped bodies to be recycled, for instance, by crushing laminated wooden floors. According to a variant the wood fibres with cured binding agent may likewise originate from crushed fibreboards and such particles originating from MDF or HDF boards being applied as particles of wood fibres with cured binding agent. Of course, in the process, a new wax may be added as an additive as well.

Of course, it is not necessary to supply the additive near the hopper 15, but it may likewise be added to the extruder 16 at a certain distance from the hopper 15 in the direction A. The polymer may likewise be added to the extruder 16 at such a point mentioned above.

Of course, it is possible to crush again into particles the shaped bodies which have been manufactured according to the method in accordance with the invention and to supply such particles again to the extruder, preferably together with particles containing wood fibres with cured binding agent that are originating from MDF or HDF shaped bodies, more preferably machined MDF or HDF shaped bodies, a polymer and/or an additive.

The particles containing wood fibres with cured binding agent originating from the machining of MDF or HDF shaped bodies or from crushing MDF or HDF particles, may, of course, likewise have a diameter considerably smaller than 0.6 mm.

The method according the invention for manufacturing a shaped body and the shaped body manufactured according to such a method are, of course, not restricted to the embodiments described, but they may likewise comprise variants and combinations of these embodiments. According to the invention, also other combinations of the particles described containing wood fibres with cured binding agent that are originating from MDF or HDF shaped bodies, more preferably machined MDF or HDF shaped bodies, the polymers described and/or the additives described may be used instead of the combinations of the abovementioned products described as embodiments.

## Claims

1. Method for manufacturing a shaped body, wherein the method comprises mixing an amount of particles containing wood fibres with cured binding agent and an amount of polymer, and extruding this mixture to combine the polymer with the particles so that the particles are at least partially sourrounded by the polymer, **characterized in that** the method comprises the mixing of an amount of particles containing wood fibres with cured binding agent, originating from MDF or HDF shaped bodies.

2. Method according to claim 1, **characterized in that** the amount of particles containing wood fibres with cured binding agent are originating from the machining of MDF or HDF shaped bodies.

3. Method according to claim 1 or 2, **characterized in that** the method comprises the supply of the said particles having a diameter less than 2 mm.

4. Method according to claim 3, **characterized in that** the method comprises the supply of the said particles having a diameter less than 0,6 mm.

5. Method according to any one of the claims 1 to 4, **characterized in that** the method comprises the sieving of the said particles before they are mixed.

6. Method according to any one of the claims 1 to 5, **characterized in that** the method comprises the supply of an amount of polymer to be mixed.

7. Method according to any one of the claims 1 to 6, **characterized in that** the method comprises the supply of polymer consisting of polypropylene, likewise called polypropene, polyethylene, both low density and high density polyethylene, polyvinyl chloride (PVC), polystyrene, ethyl vinyl acetate, acrylonitrile butadiene styrene (ABS) and/or polyolefine.

8. Method according to claims 6 or 7, **characterized in that** the method comprises the supply of an amount of particles of polymer to be mixed, originating from the machining of shaped bodies made of polymer.

9. Method according to any one of the claims 6 to 8, **characterized in that** the method comprises the supply of an amount of polymer to be mixed as a practically liquid mass or as a practically plastic mass.

10. Method according to any one of the claims 1 to 9, **characterized in that** the method comprises the supply of at least one additive.

11. Method according to claim 10, **characterized in that** the method comprises the supply of at least one additive, consisting of an anhydride, for instance maleic anhydride, a polyurethane, an unsaturated polyester, an epoxy resin, for instance liquid epoxy resin, a phenol, a sodium carbonate, a polymethyl methacrylate (PMMA), a propylene filled with maleic anhydride, a polyethylene filled with maleic anhydride, a wax and/or pure wood fibres.

12. Method according to any one of the claims 1 to 11, **characterized in that** the method comprises the cooling of the extruded material.

13. Method according to any one of the claims 1 to 12, **characterized in that** the method comprises the cooling of the extruded material by applying a liquid along the circumference of the extruded material, at the same time impregnating the extruded material.

14. Method according to any one of the claims 1 to 13, **characterized in that** the method comprises the heating up of the extruded material in order to favour the combination of the polymer.

15. Method according to any one of the claims 1 to 14, **characterized in that** the method makes use of a double screw extruder (16).

16. Method according to any one of the claims 1 to 15, **characterized in that** the method comprises the mixing of polypropylene, polypropylene filled with maleic anhydride and particles containing wood fibres with cured binding agent, more particularly particles containing wood fibres with cured melamine resin.

17. Shaped body manufactured by the mixing and the extrusion of an amount of particles containing wood fibres with cured binding agent and an amount of polymer, **characterized in that** the particles containing wood fibres with cured binding agent are originating from MDF or HDF shaped bodies.

18. Shaped body according to claim 17, **characterized in that** the particles containing wood fibres with cured binding agent are originating from the machining of MDF or MDF shaped bodies.

19. Shaped body according to claim 17 or 18, **characterized in that** the shaped body contains about 70% of wood fibres with cured binding agent originating from MDF or HDF shaped bodies, more in particular originating from the machining of MDF or HDF shaped bodies, and about 30% of polymer.

20. Shaped body according to any one of the claims 17 to 19, **characterized in that** the shaped body contains about 3% of additives.

21. Shaped body according to any one of the claims 17 to 20, **characterized in that** the shaped body contains polypropylene, polypropylene filled with maleic anhydride and particles containing wood fibres with cured binding agent, more particularly containing wood fibres with cured melamine resin originating from MDF or HDF shaped bodies, more in particular originating from the machining of MDF or HDF shaped bodies.

## Patentansprüche

1. Verfahren zur Herstellung eines Formkörpers, wobei das Verfahren das Mischen einer Menge von Partikeln, die Holzfasern mit gehärtetem Bindemittel enthalten, und einer Menge von Polymer sowie das Extrudieren dieser Mischung umfasst, um das Polymer derart mit den Partikeln zu kombinieren, dass die Partikel wenigstens teilweise von dem Polymer umgeben sind, **dadurch gekennzeichnet, dass** das Verfahren das Mischen einer Menge von Partikeln, die Holzfasern mit gehärtetem Bindemittel enthalten, umfasst, welche aus MDF- oder HDF-Formkörpern stammen.

2. Verfahren nach Anspruch 1, **dadurch gekennzeichnet, dass** die Menge von Partikeln, die Holzfasern mit gehärtetem Bindemittel enthalten, aus der Bearbeitung von MDF- oder HDF-Formkörpern stammt.

3. Verfahren nach Anspruch 1 oder 2, **dadurch gekennzeichnet, dass** das Verfahren die Zufuhr der Partikel umfasst, wobei die Partikel einen Durchmesser von weniger als 2 mm aufweisen.

4. Verfahren nach Anspruch 3, **dadurch gekennzeichnet, dass** das Verfahren die Zufuhr der Partikel umfasst, wobei die Partikel einen Durchmesser von weniger als 0,6 mm aufweisen.

5. Verfahren nach einem der Ansprüche 1 bis 4, **dadurch gekennzeichnet, dass** das Verfahren das Sieben der Partikel, bevor diese gemischt werden, umfasst.

6. Verfahren nach einem der Ansprüche 1 bis 5, **dadurch gekennzeichnet, dass** das Verfahren die Zufuhr einer Menge von beizumischendem Polymer umfasst.

7. Verfahren nach einem der Ansprüche 1 bis 6, **dadurch gekennzeichnet, dass** das Verfahren die Zufuhr eines Polymers umfasst, welches aus Polypropylen, auch Polypropen genannt, Polyethylen, sowohl Polyethylen niederer Dichte als auch Polyethylen hoher Dichte, Polyvinylchlorid (PVC), Polystyrol, Ethylvinylacetat, Acrylnitrilbutadienstyrol (ABS) und/oder Polyolefin besteht.

8. Verfahren nach Anspruch 6 oder 7, **dadurch gekennzeichnet, dass** das Verfahren die Zufuhr einer Menge von beizumischenden Partikeln aus Polymer umfasst, welche aus der Bearbeitung von Formkörpern aus Polymer stammen.

9. Verfahren nach einem der Ansprüche 6 bis 8, **dadurch gekennzeichnet, dass** das Verfahren die Zufuhr einer Menge von Polymer umfasst, welche als eine praktisch flüssige Masse oder als eine praktisch plastische Masse beigemischt wird.

10. Verfahren nach einem der Ansprüche 1 bis 9, **dadurch gekennzeichnet, dass** das Verfahren die Zufuhr wenigstens eines Zusatzstoffes umfasst.

11. Verfahren nach Anspruch 10, **dadurch gekennzeichnet, dass** das Verfahren die Zufuhr wenigstens eines Zusatzstoffes umfasst, der aus einem Anhydrid, zum Beispiel Maleinsäureanhydrid, einem Polyurethan, einem ungesättigten Polyester, einem Epoxidharz, zum Beispiel flüssiges Epoxidharz, einem Phenol, einem Natriumcarbonat, einem Polymethylmethacrylat (PMMA), einem mit Maleinsäureanhydrid gefüllten Propylen, einem mit Maleinsäureanhydrid gefüllten Polyethylen, einem Wachs und/oder reinen Pflanzenfasern besteht.

12. Verfahren nach einem der Ansprüche 1 bis 11, **dadurch gekennzeichnet, dass** das Verfahren die Kühlung des extrudierten Materials umfasst.

13. Verfahren nach einem der Ansprüche 1 bis 12, **dadurch gekennzeichnet, dass** das Verfahren die Kühlung des extrudierten Materials durch Aufbringen einer Flüssigkeit entlang des Umfangs des extrudierten Materials und die gleichzeitige Imprägnierung des extrudierten Materials umfasst.

14. Verfahren nach einem der Ansprüche 1 bis 13, **dadurch gekennzeichnet, dass** das Verfahren das Aufheizen des extrudierten Materials umfasst, um die Kombination des Polymers mit den Partikeln zu begünstigen.

15. Verfahren nach einem der Ansprüche 1 bis 14, **dadurch gekennzeichnet, dass** bei dem Verfahren ein Doppelschneckenextruder (16) verwendet wird.

16. Verfahren nach einem der Ansprüche 1 bis 15, **dadurch gekennzeichnet, dass** das Verfahren das Mischen von Polypropylen, von mit Maleinsäureanhydrid gefülltem Polypropylen und von Partikeln, die Holzfasern mit gehärtetem Bindemittel enthalten, insbesondere von Partikeln, die Holzfasern mit gehärtetem Melaminharz enthalten, umfasst.

17. Formkörper, der durch Mischen und Extrudieren einer Menge von Partikeln, die Holzfasern mit gehärtetem Bindemittel enthalten, und einer Menge von Polymer hergestellt wird, **dadurch gekennzeichnet, dass** die Holzfasern mit gehärtetem Bindemittel enthaltenden Partikel aus MDF- oder HDF-Formkörpern stammen.

18. Formkörper nach Anspruch 17, **dadurch gekennzeichnet, dass** die Holzfasern mit gehärtetem Bindemittel enthaltenden Partikel aus der Bearbeitung von MDF- oder HDF-Formkörpern stammen.

19. Formkörper nach Anspruch 17 oder 18, **dadurch gekennzeichnet, dass** der Formkörper etwa 70 % Holzfasern mit gehärtetem Bindemittel, welche aus MDF- oder HDF-Formkörpern, insbesondere aus der Bearbeitung von MDF- oder HDF-Formkörpern, stammen, sowie etwa 30 % Polymer enthält.

20. Formkörper nach einem der Ansprüche 17 bis 19, **dadurch gekennzeichnet, dass** der Formkörper etwa 3 % Zusatzstoffe enthält.

21. Formkörper nach einem der Ansprüche 17 bis 20, **dadurch gekennzeichnet, dass** der Formkörper Polypropylen, mit Maleinsäureanhydrid gefülltes Polypropylen sowie Partikel enthält, welche Holzfasern mit gehärtetem Bindemittel, insbesondere Holzfasern mit gehärtetem Melaminharz, enthält und aus MDF- oder HDF-Formkörpern, insbesondere aus der Bearbeitung von MDF- oder HDF-Formkörpern, stammen.

## Revendications

1. Procédé de fabrication d'un objet moulé, dans lequel le procédé comprend le mélange d'une quantité de particules contenant des fibres de bois avec un agent liant durci et une quantité de polymère, et l'extrusion de ce mélange pour combiner le polymère avec les particules de telle sorte que les particules soient au moins partiellement entourées par le polymère, **caractérisé en ce que** le procédé comprend le mélange d'une quantité de particules contenant des fibres de bois avec un agent liant durci, provenant d'objets moulés de MDF ou de HDF.

2. Procédé selon la revendication 1, **caractérisé en ce que** la quantité de particules contenant des fibres de bois mélangées avec un agent liant durci proviennent de l'usinage d'objets moulés de MDF ou de HDF.

3. Procédé selon la revendication 1 ou 2, **caractérisé en ce que** le procédé comprend l'utilisation de particules dont le diamètre est inférieur à 2 mm.

4. Procédé selon la revendication 3, **caractérisé en ce que** le procédé comprend l'utilisation de particules dont le diamètre est inférieur à 0,6 mm.

5. Procédé selon l'une quelconque des revendications 1 à 4, **caractérisé en ce que** le procédé comprend le tamisage desdites particules avant qu'elles soient mélangées.

6. Procédé selon l'une quelconque des revendications 1 à 5, **caractérisé en ce que** le procédé comprend l'utilisation d'une quantité de polymère à mélanger.

7. Procédé selon l'une quelconque des revendications 1 à 6, **caractérisé en ce que** le procédé comprend l'utilisation d'un polymère constitué de polypropylène, également appelé polypropène, de polyéthylène, de polyéthylène à la fois à haute densité et à basse densité, de chlorure de polyvinyle (PVC), de polystyrène, d'éthyle vinyle acétate, d'acrylonitrile butadiène styrène (ABS) et/ou de polyoléfine.

8. Procédé selon la revendication 6 ou 7, **caractérisé en ce que** le procédé comprend l'utilisation d'une quantité de particules de polymère à mélanger, provenant de l'usinage d'objets moulés constitués de polymère.

9. Procédé selon l'une quelconque des revendications 6 à 8, **caractérisé en ce que** le procédé comprend l'utilisation d'une quantité de polymère à mélanger sous la forme d'une masse pratiquement liquide ou d'une masse pratiquement plastique.

10. Procédé selon l'une quelconque des revendications 1 à 9, **caractérisé en ce que** le procédé comprend l'utilisation d'au moins un additif.

11. Procédé selon la revendication 10, **caractérisé en ce que** le procédé comprend l'utilisation d'au moins un additif, constitué d'un anhydride, par exemple un anhydride maléique, d'un polyuréthane, d'un polyester insaturé, d'une résine époxy, par exemple une résine époxy liquide, d'un phénol, de carbonate de sodium, d'un polyméthyle méthacrylate (PMMA), d'un propylène chargé en anhydride maléique, d'un polyéthylène chargé en anhydride maléique, d'une cire et/ou de fibres de bois pures.

12. Procédé selon l'une quelconque des revendications 1 à 11, **caractérisé en ce que** le procédé comprend le refroidissement de la matière extrudée.

13. Procédé selon l'une quelconque des revendications 1 à 12, **caractérisé en ce que** le procédé comprend le refroidissement de la matière extrudée en appliquant un liquide le long de la circonférence de la matière extrudée, et en imprégnant en même temps la matière extrudée.

14. Procédé selon l'une quelconque des revendications 1 à 13, **caractérisé en ce que** le procédé comprend le chauffage de la matière extrudée dans le but de favoriser la combinaison du polymère.

15. Procédé selon l'une quelconque des revendications 1 à 14, **caractérisé en ce que** le procédé utilise une extrudeuse à double vis (16).

16. Procédé selon l'une quelconque des revendications 1 à 15, **caractérisé en ce que** le procédé comprend le mélange de polypropylène, de polypropylène chargé en anhydride maléique et de particules contenant des fibres de bois avec un agent liant durci, plus particulièrement des particules contenant des fibres de bois avec une résine mélamine durcie.

17. Objet moulé fabriqué par le mélange et l'extrusion d'une quantité de particules contenant des fibres de bois avec un agent liant durci et une quantité de polymère, **caractérisé en ce que** les particules contenant des fibres de bois mélangées avec un agent liant durci proviennent d'objets moulés de MDF ou de HDF.

18. Objet moulé selon la revendication 17, **caractérisé en ce que** les particules contenant des fibres de bois mélangées avec un agent liant durci proviennent de l'usinage d'objets moulés de MDF ou de HDF.

19. Objet moulé selon la revendication 17 ou 18, **caractérisé en ce que** l'objet moulé contient environ 70 % de fibres de bois mélangées avec un agent liant durci provenant d'objets moulés de MDF ou de HDF, et provenant plus particulièrement de l'usinage d'objets moulés de MDF et de HDF, et environ 30 % de polymère.

20. Objet moulé selon l'une quelconque des revendications 17 à 19, **caractérisé en ce que** l'objet moulé contient environ 3 % d'additifs.

21. Objet moulé selon l'une quelconque des revendications 17 à 20, **caractérisé en ce que** l'objet moulé contient du polypropylène, du polypropylène chargé en anhydride maléique, et des particules contenant des fibres de bois mélangées avec un agent liant durci, et contenant plus particulièrement des fibres de bois mélangées avec une résine mélamine durcie provenant d'objets moulés en MDF ou en HDF, et provenant plus particulièrement de l'usinage d'objets moulés en MDF ou en HDF.
